# EUROPÄISCHE PATENTSCHRIFT

(11) **EP 0 459 546 B1**
(45) Veröffentlichungstag und Bekanntmachung des Hinweises auf die Patenterteilung: **18.11.1993**
(21) Anmeldenummer: 91200969.3
(22) Anmeldetag: 23.04.1991
(51) Int. Cl.: F16J 1/22, F02F 7/00, F02F 3/00

(54) **Kolben-Pleuel-Anordnung**
Piston-connecting rod arrangement
Agencement piston-bielle

(30) Priorität: 24.05.1990 DE 4016723
(43) Veröffentlichungstag der Anmeldung: 04.12.1991
(73) Patentinhaber: KOLBENSCHMIDT Aktiengesellschaft, D-74150 Neckarsulm (DE)
(72) Erfinder: Reipert, Peter, Dr., W-7000 Stuttgart 31 (DE); Kolb, Arno, W-7101 Offenau (DE); Mielke, Siegfried, Dr., W-7107 Neckarsulm (DE); Coners, Tjark, W-7107 Neckarsulm (DE); Reichenbach, Dean H., Kolumbus, Indiana (US)
(74) Vertreter: Rieger, Harald, Dr.

(56) Entgegenhaltungen:
- EP-A- 0 069 579
- EP-A- 0 143 330
- DE-C- 667 004
- US-A- 2 926 975

## Beschreibung

Die Erfindung betrifft eine Kolben-Pleuel-Anordnung für Brennkraftmaschinen, bestehend aus einem Ober- und Unterteil umfassenden gegossenen Kolben aus für den Kolbenbau verwendeter Aluminiumlegierung und einem kugelförmigen Pleuelkopf, der auf der der Pleuelstange abgewandten Seite in einer kugelabschnittförmigen Vertiefung der Unterseite des Kolbenbodens und in dem an die Kolbenstange angrenzenden Bereich in einem gelenklagerförmigen, mit dem Kolbenschaft lösbar verbundenen Haltering gelagert ist.

Derartige Kolben-Pleuel-Anordnungen zeichnen sich durch eine gute Geradführung des Kolbens, durch einen vergleichsweise kurzen Kolbenschaft, eine absolut achssymmetrische thermische Ausdehnung und ein enges Spiel zwischen Kolben und Zylinderlaufbahn aus.

Aus der EP-B-0 069 579, auf welcher der Oberbegriff des Anspruchs 1 basiert, ist eine Kolben-Pleuel-Anordnung bekannt, bei der in einen hohlzylinderförmigen Kolbenmantel ein zylinderförmiger Körper aus feuerfestem Werkstoff eingesetzt ist, der den Kolbenboden bildet und auf seiner Innenseite eine kugelabschnittförmige Ausnehmung aufweist, wobei in dieser Ausnehmung die der Kolbenstange abgewandte Seite des kugelförmigen Pleuelkopfs gelagert ist. Um den Pleuelkopf in der kugelabschnittförmigen Ausnehmung zu halten, ist dieser in einem die Zone um die Kolbenstange umgreifenden gelenklagerförmigen Haltering gelagert. Dieser Kolben ist jedoch nicht für den Einsatz in hochbelasteten Nutzfahrzeug-Dieselmotoren geeignet.

Es ist die Aufgabe der vorliegenden Erfindung, einen hochbelastbaren Kolben für Nutzfahrzeug-Dieselmotoren bereitzustellen, mit dem Ziel, niedrigen Ölverbrauch über lange Laufzeit bei gleichzeitig optimalen Voraussetzungen für niedrigen Kraftstoffverbrauch und minimale Schadstoffemission sowie die Gestaltfestigkeit bei Zünddrücken bis 200 bar und mehr zu gewährleisten.

Die Lösung dieser Aufgabe besteht darin, daß der Leichtmetallkolben preßgegossen ist, Ober- und Unterteil aus Faserverbundwerkstoff bestehen, in der Ringpartie ein offene, vollständig mit der Aluminiumlegierung des Kolbens ausgefüllte Poren aufweisender Ringträger unter metallischer Bindung mit dem Kolbenkörper eingegossen ist, das Oberteil in einer an die kugelabschnittförmige Vertiefung angrenzenden Schicht faserfrei ist und auf der Innenseite des Unterteils ein als Widerlager für den Haltering dienender Bund angegossen ist.

Im Rahmen der weiteren Ausgestaltung ist das Unterteil des Kolbens auf den vorzugsweise aus Grauguß bestehenden Haltering aufgeschrumpft, der zusätzlich durch einen oberhalb des Einpasses des Unterteils eingeschraubten, aus faserverstärkter Aluminiumlegierung des Kolbens bestehenden Gewindering gesichert ist. Durch das Aufschrumpfen des Kolbenunterteils auf den Haltering wirkt dieser gleichzeitig als Regelglied, das die kreisförmige Form des Kolbenunterteils unter allen Betriebsbedingungen gewährleistet.

Um eine einfache Montage des kugelförmigen Schaftendes zu gewährleisten, besteht der Haltering aus zwei Segmenten, die nach erfolgter Montage durch in entsprechende Bohrungen eingefügte Stifte miteinander verbunden sind.

Um einen möglichst niedrigen Kraftstoffverbrauch und Schadstoffemission sowie einen optimalen Schutz der Verdichtungsringe durch die höhere Lage der Ringpartie zu erzielen, sind der kurze Feuersteg mit einer Höhe von ca. 5 bis 10 % des Kolbendurchmessers und durchgehend kleinem Spiel sowie die erste und zweite Verdichtungsringnut von einem Doppelringträger umfaßt.

Die Feinabstimmung des Spiels des Kolbenoberteils wird durch die guten Geradführungseigenschaften des Kolbenunterteils ermöglicht. Durch die höhere Lage des Ringfeldes ergibt sich eine größere Schaftführungslänge.

Eine keramische Beschichtung des Kolbenbodens kann aus einer Schicht mit einer Dicke von um 0,5 bis 5 mm, vorzugsweise 1 bis 2 mm, beispielsweise aus teilstabilisiertem Zirkondioxid oder Aluminiumtitanat bestehen, um den Kolben und die Ringpartie ausreichend gegen den Wärmestrom abzuschirmen.

Der im Bereich zwischen der Unterseite des Kolbenbodens und dem auf der Innenseite des Kolbenunterteils vorhandenen Bund befindliche Ringraum dient als Kühlkanal, der sich nach einem weiteren Erfindungsmerkmal bis in die Nähe der durch die untere Flanke der Ölringnut gelegten Ebene erstreckt.

Um eine Shakerwirkung des Kühlöls in dem Kühlkanal zu erreichen, ist die zum Kolbenboden weisende kreisringförmige Fläche des Bundes als Rinne ausgebildet.

Zweckmäßigerweise besteht der Ringträger aus kaltgepreßten Spänen aus austenitischem Gußeisen oder aus hochporösem Sinterwerkstoff auf Nickel- oder Chrom-Nickelbasis.

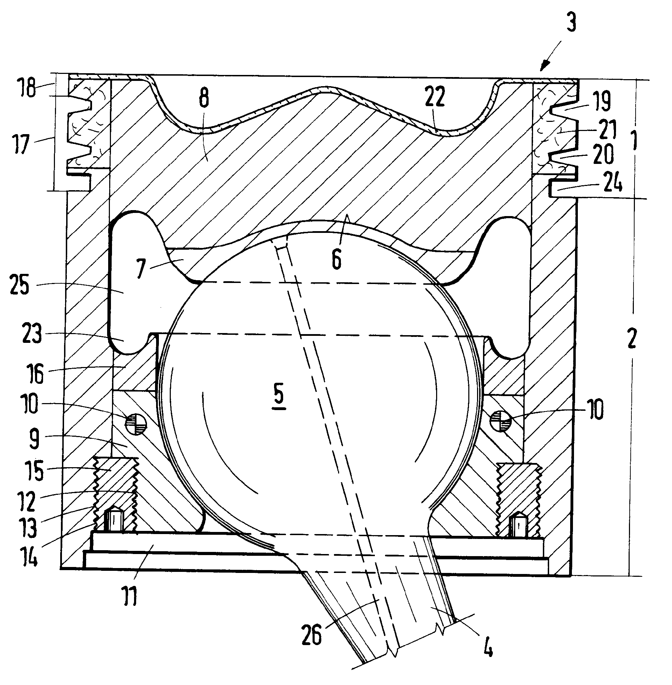

Die Erfindung ist in der Zeichnung, die einen Schnitt durch den erfindungsgemäß gestalteten Kolben für Brennkraftmaschinen entlang der Kolbenachse zeigt, näher und beispielhaft erläutert.

Die erfindungsgemäße Kolben-Pleuel-Anordnung umfaßt den aus einer Kolben-Aluminiumlegierung des Typs AlSi12CuNiMg preßgegossenen, aus mit Fasern verstärktem Kopf (1) und Schaft (2) bestehenden Kolben (3) und den mit der Pleuelstange (4) verbundenen kugelförmigen Pleuelkopf (5). Der Pleuelkopf (5) ist auf der der Pleuelstange (4) abgewandten Seite in einer kugelabschnittförmigen Vertiefung (6) der Unterseite des in dem an die Vertiefung angrenzenden faserfreien Bereich (7) des Kolbenbodens (8) gelagert. In dem an die Pleuelstange (4) angrenzenden Bereich ist der Pleuelkopf (5) durch einen in den Kolbenschaft (2) eingeschrumpften gelenklagerförmigen, aus Grauguß bestehenden Haltering (9) gesichert, der aus zwei Hälften besteht, die durch Zylinderstifte (10) miteinander verbunden sind. Auf dem Außenumfang des Halterings (9) befindet sich in dessen unterem Abschnitt und unmittelbar gegenüberliegend oberhalb des Einpasses (11) am Kolbenschaft jeweils eine Eindrehung (12,13), die auf der Seite des Kolbenschafts mit einem Gewinde (14) versehen ist. In die durch die Eindrehungen (12,13) gebildete hohlzylinderförmige Ausnehmung ist ein aus faserverstärkter Kolbenlegierung bestehender Gewindering (15) so eingedreht, daß der Haltering (9) gegen den auf der Innenseite des Kolbenschafts (2) angegossenen Bund (16) verspannt ist. Im Bereich der Ringpartie (17) und des Feuerstegs (18) ist ein den Feuersteg (18) und die erste und zweite Verdichtungsringnute (19,20) einschließender Doppelringträger (21), der aus kaltgepreßten Spänen aus austenitischem Gußeisenwerkstoff besteht, unter metallischer Bindung und Füllung der Poren mit dem Kolbenwerkstoff eingegossen. Auf den Kolbenboden (8) ist eine 2 mm dicke Wärmedämmschicht (22) aus Zirkondioxid aufgetragen. Der zwischen der Unterseite des Kolbenbodens (8) und der als Rinne (23) gestalteten Oberseite des Bundes (16) befindliche, sich bis kurz unterhalb der die untere Flanke der Ölringnut (24) einschließenden Ebene erstreckende Ringraum (25) dient als Kühlkanal für das als Kühlmittel wirkende Schmieröl. Über die durch die Pleuelstange (4) und den Pleuelkopf (5) geführte Bohrung (26) wird Schmiermittel in den zwischen der Vertiefung (6) und dem Pleuelkopf (5) befindlichen Schmierspalt geführt.

## Patentansprüche

1. Kolben-Pleuel-Anordnung für Brennkraftmaschinen, bestehend aus einem Ober- (1) und Unterteil (2) umfassenden gegossenen Kolben (3) aus für den Kolbenbau verwendeter Aluminiumlegierung und einem kugelförmigen Pleuelkopf (5), der auf der der Pleuelstange (4) abgewandten Seite in einer kugelabschnittförmigen Vertiefung (6) der Unterseite des Kolbenbodens (8) und in dem an die Pleuelstange (4) angrenzenden Bereich in einem gelenklagerförmigen, mit dem Kolbenschaft lösbar verbundenen Haltering (9) gelagert ist, dadurch gekennzeichnet, daß Ober- (1) und Unterteil (2) des preßgegossenen Leichtmetallkolbens (3) mit Fasern verstärkt sind, das Oberteil in der an die kugelabschnittförmige Vertiefung (6) der Unterseite des Kolbenbodens (8) angrenzenden Schicht (7) faserfrei ist, im Bereich der Ringpartie (17) ein offener, vollständig mit der Aluminiumlegierung des Kolbens ausgefüllte Poren aufweisender Ringträger (21) unter metallischer Bindung eingegossen ist und auf der Innenseite des Unterteils ein als Widerlager für den Haltering (9) dienender Bund (16) angegossen ist.

2. Kolben-Pleuel-Anordnung nach Anspruch 1, dadurch gekennzeichnet, daß das Unterteil (2) auf den Haltering (9) aufgeschrumpft ist.

3. Kolben-Pleuel-Anordnung nach den Ansprüchen 1 und 2, dadurch gekennzeichnet, daß der Haltering (9) aus Grauguß besteht.

4. Kolben-Pleuel-Anordnung nach den Ansprüchen 1 bis 3, dadurch gekennzeichnet, daß der Haltering (9) aus vorzugsweise zwei Segmenten besteht.

5. Kolben-Pleuel-Anordnung nach den Ansprüchen 1 bis 4, dadurch gekennzeichnet, daß oberhalb des Einpasses (11) des Unterteils (2) ein Gewinde (14), in das ein den Haltering (9) gegen den Bund (16) verspannender Gewindering (15) eingeschraubt ist, angebracht ist.

6. Kolben-Pleuel-Anordnung nach Anspruch 4, dadurch gekennzeichnet, daß der Gewindering (15) aus faserverstärkter Aluminiumlegierung des Kolbens besteht.

7. Kolben-Pleuel-Anordnung nach den Ansprüchen 1 bis 5, gekennzeichnet durch einen den Feuersteg (18) und die erste und zweite Verdichtungringnut (19,20) einschließenden Doppelringträger (21).

8. Kolben-Pleuel-Anordnung nach den Ansprüchen 1 bis 7, dadurch gekennzeichnet, daß auf den Kolbenboden (8) eine Wärmedämmschicht (22) aus Keramikwerkstoff, wie Aluminiumtitanat, Zirkondioxid oder dergl., aufgetragen ist.

9. Kolben-Pleuel-Anordnung nach Anspruch 8, dadurch gekennzeichnet, daß die Wärmedämmschicht (22) eine Dicke von 0,5 bis 5 mm, vorzugsweise 1 bis 2 mm, besitzt.

10. Kolben-Pleuel-Anordnung nach den Ansprüchen 1 bis 9, dadurch gekennzeichnet, daß der zwischen der Unterseite des Kolbenbodens (8) und dem am Unterteil (2) des Kolbens (3) umlaufenden Bund (16) vorhandene Ringraum (25) als Kühlkanal dient.

11. Kolben-Pleuel-Anordnung nach Anspruch 10, dadurch gekennzeichnet, daß sich der Ringraum (25) in den Kolbenboden (8) bis kurz unterhalb der die untere Flanke der Ölringnute (24) einschließenden Ebene erstreckt.

12. Kolben-Pleuel-Anordnung nach den Ansprüchen 10 und 11, dadurch gekennzeichnet, daß die Oberseite des Bundes (16) als Rinne (23) gestaltet ist.

13. Kolben-Pleuel-Anordnung nach den Ansprüchen 1 bis 12, dadurch gekennzeichnet, daß der Ringträger (21) aus kaltgepreßten Spänen aus austenitischem Gußeisen besteht.

14. Kolben-Pleuel-Anordnung nach den Ansprüchen 1 bis 12, dadurch gekennzeichnet, daß der Ringträger (21) aus hochporösem Sinterwerkstoff auf Nickel- oder Chrom-Nickelbasis besteht.

## Claims

1. A piston-connecting rod assembly for internal combustion engines, consisting of a cast piston (3) comprising a top part (1) and a bottom part (2) and consisting of an aluminum alloy for making pistons, and a spherical connecting rod small end (5), which on the side that is remote from the connecting rod (4) is movably mounted in a spherical cap-shaped recess (6) in the underside of the piston head (8) and in the region which adjoins the connecting rod (4) is movably mounted in a retaining ring (9), which is similar to a spherical bearing and is detachably connected to the piston skirt, characterized in that the top part (1) and the bottom part (2) of the pressure diecast light alloy piston (3) are reinforced by fibres, the top part is free of fibers in the layer (7) which adjoins the spherical cap-shaped recess (6) in the underside of the piston head (8), an open ring carrier (21), which has pores completely filled with the aluminum alloy of the piston, is embedded adjacent to the ring zone and joined by a metal-to-metal bond, and a collar (16) serving as an abutment for the retaining ring (9) joined by casting to the inside surface of the bottom part.

2. A piston-connecting rod assembly according to claim 1, characterized in that the bottom part (2) has been shrunk onto the retaining ring (9).

3. A piston-connecting rod assembly according to claims 1 and 2, characterized in that the retaining ring (9) consists of grey cast iron.

4. A piston-connecting rod assembly according to claims 1 to 3, characterized in that the retaining ring (9) consists of preferably two segments.

5. A piston-connecting rod assembly according to claims 1 to 4, characterized in that screw threads (14) are provided above the chucking recess (11) in the bottom part (2) and a screw-threaded ring (15) for clamping the retaining ring (9) against the collar (16) has been screwed into said screw threads.

6. A piston-connecting rod assembly according to claim 4, characterized in that the screw-threaded ring (15) consists of the fiber-reinforced aluminum alloy of the piston.

7. A piston-connecting rod assembly according to claims 1 to 5, characterized by a double ring carrier (21), which encloses the fire land (18) and the first and second compression ring grooves (19, 20).

8. A piston-connecting rod assembly according to claims 1 to 7, characterized in that a heat-insulating layer (22) made of a ceramic material, such as aluminum titanate, zirconium dioxide or the like, has been applied to the piston head (8).

9. A piston-connecting rod assembly according to claim 8, characterized in that the heat-insulating layer (22) has a thickness of 0.5 to 5 mm, preferably 1 to 2 mm.

10. A piston-connecting rod assembly according to claims 1 to 9, characterized in that the annular space (25) provided between the underside of the piston head (8) and the collar (16) around the bottom part (2) of the piston (3) serves as a cooling passage.

11. A piston-connecting rod assembly according to claim 10, characterized in that the annular space (25) extends into the piston head to closely below the plane which includes the lower side face of the oil ring groove (24).

12. A piston-connecting rod assembly according to claims 10 and 11, characterized in that the upper surface of the collar (16) constitutes a trough (23).

13. A piston-connecting rod assembly according to claims 1 to 12, characterized in that the ring carrier (21) consists of cold-pressed chips of austenitic cast iron.

14. A piston-connecting rod assembly according to claims 1 to 12, characterized in that the ring carrier (21) consists of highly porous sintered material on the basis of nickel or chromium-nickel.

## Revendications

1. Dispositif bielle-piston pour des moteurs à combustion interne, constitué d'un piston (3) coulé en alliage d'aluminium utilisé pour la fabrication des pistons et comprenant une partie supérieure (1) et une partie inférieure (2) et un pied (5) de bielle sphérique qui, du côté éloigné de la tige (4) de bielle, est placé dans une cavité (6) en forme de calotte sphérique de la face inférieure de la tête (8) du piston et dans la partie adjacente à la tige (4) est monté un anneau (9) de maintien relié de manière amovible à la tige du piston et en forme d'articulation à rotule, caractérisé en ce que la partie supérieure (1) et la partie inférieure (2) du piston (3) en métal léger coulé sous pression sont renforcées de fibres, la partie supérieure étant dépourvue de fibres sur la couche (7) adjacente à la cavité (6) en forme de calotte sphérique de la face inférieure de la tête (8) de piston, un porte-segments (21), ouvert et comportant des pores entièrement emplis de l'alliage d'aluminium du piston, étant coulé, avec liaison métallique, dans la zone des segments et un collier (16) servant de butée à l'anneau (9) de maintien étant coulé sur la face intérieure de la partie inférieure.

2. Dispositif bielle-piston suivant la revendication 1, caractérisé en ce que la partie (2) inférieure est frettée sur l'anneau (9) de maintien.

3. Dispositif bielle-piston suivant l'une des revendications 1 ou 2, caractérisé en ce que l'anneau (9) de maintien est en fonte à graphite lamellaire.

4. Dispositif bielle-piston suivant l'une des revendications 1 à 3, caractérisé en ce que l'anneau (9) de maintien est constitué de préférence de deux segments.

5. Dispositif bielle-piston suivant l'une des revendications 1 à 4, caractérisé en ce qu'au-dessus de la pièce de fixation (11) de la partie inférieure (2) est prévu un taraudage (14) dans lequel se visse une bague filetée (15) bloquant l'anneau (9) de maintien sur le collier (16).

6. Dispositif bielle-piston suivant la revendication 4, caractérisé en ce que la bague filetée (15) est en l'alliage d'aluminium du piston renforcé de fibres.

7. Dispositif bielle-piston suivant l'une des revendications 1 à 5, caractérisé par un porte-segments (21) double incluant la zone de feu (18) et la première et la deuxième gorges annulaires (19, 20) d'étanchéité.

8. Dispositif bielle-piston suivant l'une des revendications 1 à 7, caractérisé en ce que sur la tête (8) du piston est déposée une couche (22) calorifuge en matériau céramique, comme en titanate d'aluminium, en dioxyde de zirconium ou analogue.

9. Dispositif bielle-piston suivant la revendication 8, caractérisé en ce que la couche (22) calorifuge a une épaisseur de 0,5 à 5 mm et, de préférence, de 1 à 2 mm.

10. Dispositif bielle-piston suivant l'une des revendications 1 à 9, caractérisé en ce que l'espace annulaire (25) présent entre la face inférieure de la tête (8) du piston et le collier (16) faisant tout le tour de la partie inférieure (2) du piston (3) sert de canal de refroidissement.

11. Dispositif bielle-piston suivant la revendication 10, caractérisé en ce que l'espace annulaire (25) ménagé dans la tête (8) du piston s'étend jusque peu en-dessous du plan passant par les flancs inférieurs des gorges (24) des bagues de graissage.

12. Dispositif bielle-piston suivant la revendication 10 ou 11, caractérisé en ce que la face supérieure du collier (16) est conformée en rigole (23).

13. Dispositif bielle-piston suivant l'une des revendications 1 à 12, caractérisé en ce que le porte-segments (21) est constitué de copeaux de fonte austénitique compactés à froid.

14. Dispositif bielle-piston suivant l'une des revendications 1 à 12, caractérisé en ce que le porte-segments (21) est en un matériau fritté très poreux, à base de nickel ou de chrome et de nickel.
